# EUROPEAN PATENT APPLICATION

(11) **EP 1 089 057 A1**
(43) Date of publication of application: **04.04.2001**
(21) Application number: 00121111.9
(22) Date of filing: 28.09.2000
(51) Int. Cl.: G01D 5/20

(54) **A sensor for detecting the angular position of a rotatable member**

(30) Priority: 29.09.1999 IT TO990836
(71) Applicant: BITRON S.p.A., 10042 Nichelino (Torino) (IT)
(72) Inventor: Coletti, Delio, 17100 Savona (IT); Boccaccio, Giovanni, 16134 Genova (IT)
(74) Representative: Quinterno, Giuseppe

(57) **Abstract**

The sensor (1) comprises a casing (2) in which is rotatably mounted a rotor (3) which can be coupled for rotation with a rotatable member such as an accelerator pedal (P), and having a pair of transverse arms (15, 16). Each of these arms (15, 16) is connected to a respective arcuately curved core of ferromagnetic material (17, 18) which curves along an arc of a circle co-axial with an axis of (A-A) of the rotor (8). A pair of solenoids (29, 30) is fixed in the casing (2), each solenoid having its longitudinal arcuate axis lying along an arc of a circle co-axial with the axis A-A of the rotor (8), and each associated with a respective core (17, 18) of the rotor (8) in such a way that upon variation in the angular position of the rotor (8) with respect to the casing (2) the angular penetration of the cores (17, 18) into the associated solenoids (29, 30) varies correspondingly, and consequently likewise the inductance of the solenoids (29, 30), likewise varies correspondingly.

## Description

The present invention relates to a contactless position sensor for detecting the angular position of a rotatable member such as an accelerator pedal of a motor vehicle.

The object of the present invention is to provide an angular position sensor which is simple and economic to produce, and which has a high operating reliability.

This and other objects are achieved according to the invention with an angular position sensor the salient characteristics of which are defined in the annexed Claim 1.

Further characteristics and advantages of the invention will come apparent from the following detailed description, given purely by way of non-limitative example, with reference to the attached drawings in which:
Figure 1 is a side view of an angular position sensor according to the invention;
Figure 2 is an axial section view of the sensor of Figure 1;
Figure 2a shows, on an enlarged scale, a detail indicated by the arrow IIa in Figure 2;
Figure 3 is a sectional view taken on the line III-III of Figure 2;
Figure 4 is a side view of a rotor suitable for a sensor according to the invention;
Figure 5 is a sectional view taken on the line V-V of Figure 4;
Figure 6 is a front view of a coil for a sensor according to the invention;
Figure 7 is a sectional view taken on line VII-VII of Figure 6;
Figure 8 is a partial sectional view taken on the line VIII-VIII of Figure 7; and
Figures 9 and 10 are similar sectional views to those of Figure 3, and show the sensor of the invention in two different positions.

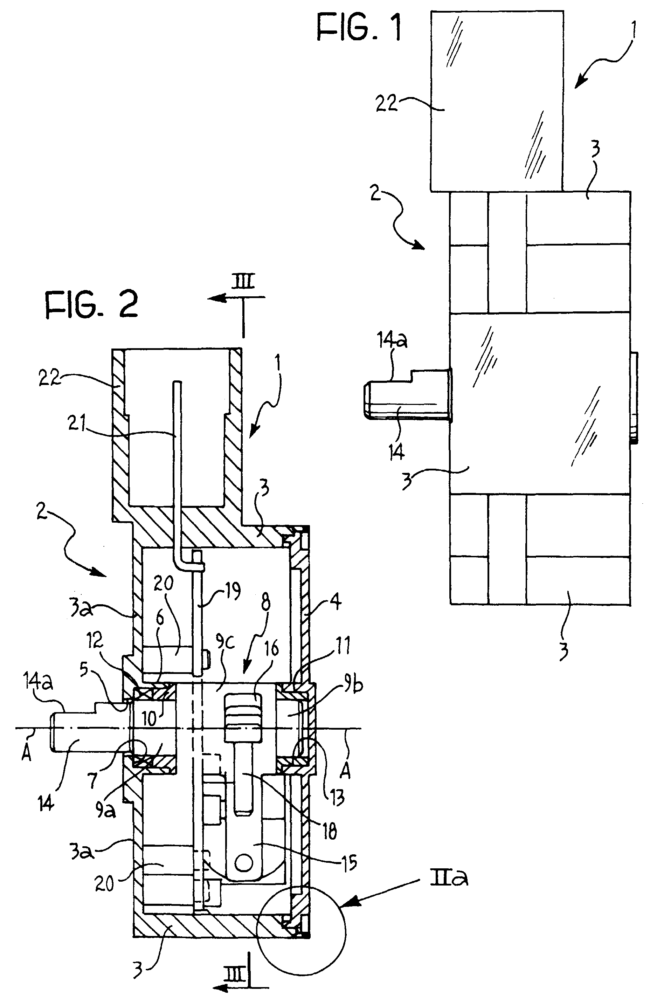

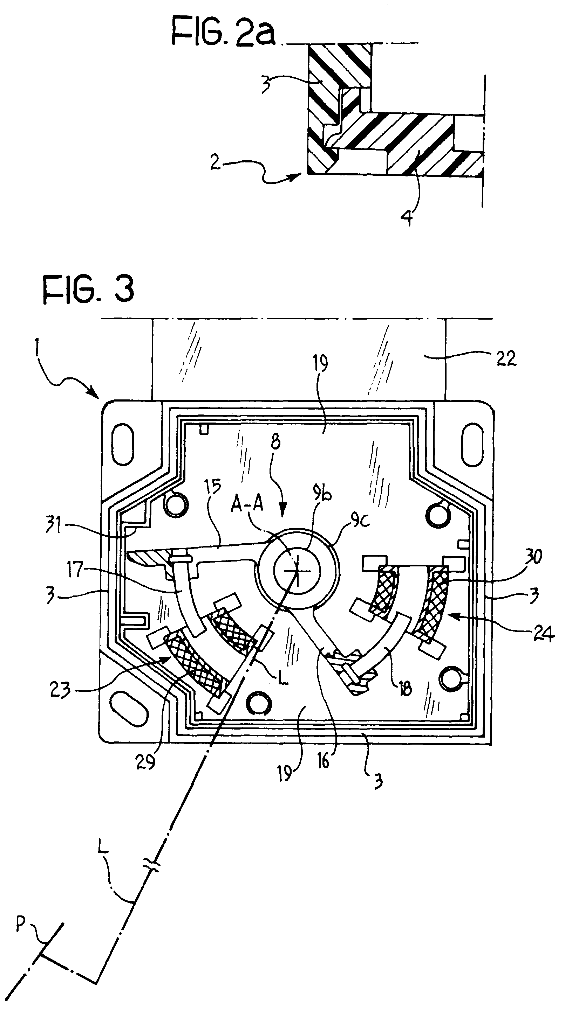

In Figures 1 and 2 an angular position sensor according to the invention is generally indicated 1.

This sensor comprises a support casing 2 which, in the illustrated embodiment, essentially comprises a bowl-shape body 3 preferably made of moulded plastics material, and an associated closure cover 4 (Figure 2). This cover is also conveniently made of moulded plastics material.

In the example shown in the drawings (see in particular Figure 2a) the cover 4 is snap enagageable to the edge of the rim of the body 3.

With reference to Figure 2, an aperture 5 is formed in the wall 3a of the body 3 which faces the cover 4. From the wall 3a around the edge of the aperture 5 a tubular projection indicated 6 extends into the casing 2. This tubular projection has an internal diameter greater than the diameter of the aperture 5 so that between the root of this projection and the aperture 5 there is defined an annular shoulder 7.

A rotor generally indicated 8 (see for example Figures 2 to 5) is rotatably housed within the interior of the casing 2.

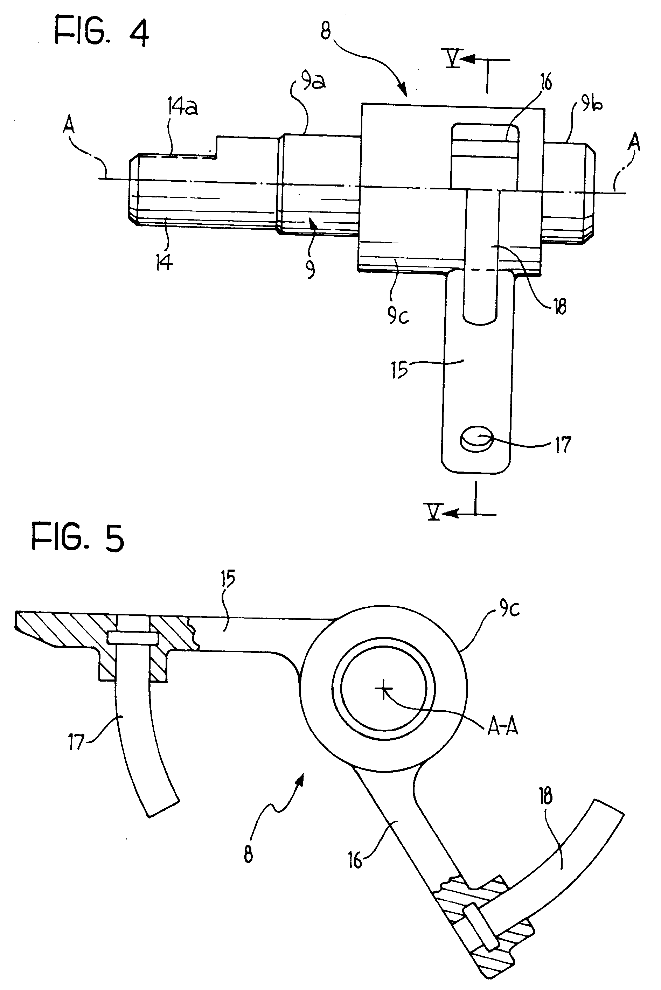

In the exemplary embodiment illustrated the rotor 8 comprises a shaft 9 the ends 9a and 9b of which are supported for rotation about an axis A-A (Figures 2 and 4) by means of respective bushes indicated 10 and 11 in Figure 2.

The bush 10 is fitted between the distal end of the tubular projection 6 of the body 3 and an enlarged central portion 9c of the rotor 8. Between the bush 10 and the previously described shoulder 7 is fitted a seal 12 (Figure 2).

The bush 11 is fitted in a cylindrical seat 13 formed in the cover 4.

The end 9a of shaft 9 has a cylindrical extension 14 (Figures 2 and 4) which projects out from the casing 2 and which has a chordal flat 14a to allow the rotor 8 to be connected for rotation with the rotatable member with which the angular position sensor 1 is to be operatively associated. Naturally, other arrangements, known per se, can be adopted to achieve this coupling.

As can be seen better for example in Figures 3 to 5, from the portion 9c of the rotor 8 extends a pair of transverse arms 15 and 16. This are essentially co-planar and angularly spaced.

Two each of these arms 15 and 16 are connected respective cores 17 and 18 of ferromagnetic material (for example ferrite).

The rotor 8 with the associated arms 15 and 16 is conveniently made of moulded plastics material. The cores 17 and 18 can be partially embedded in the arms 15 and 16 during the rotor moulding operation. Alternatively, the said cores may be connected stably to the arms of the rotor in any known way, for example by means of adhesive.

The portions of the cores 17 and 18 which project from the arms 15 and 16 are arcuate, following an arc of a circle co-axial with the axis of rotation A-A of the rotor (Figures 3 to 5). The said cores are preferably aligned along the same circle co-axial with the axis of the rotor and have the same angular extent, although less than the angular distance between the associated arms 15 and 16 of the rotor. Moreover, the cores 17 and 18 extend from the respective arms 15 and 16 in the same angular direction.

As seen in Figure 2, within the casing 2 there is fixed a circuit board, here indicated 19. This board is fixed to the body 3 of the casing on support columns 20 which project internally to the casing 2 from the wall 3a of the body 3. The anchorage of the board 19 to the said columns can be achieved for example by means of screws or rivets or by cold upsetting of the terminal projections of the said columns which pass through corresponding openings of this board, or in any other way.

To the board 19 are fixed connections member 21 (Figure 2) shaped, for example, in the form of flat pins, which extend through a portion 22 of the casing 2 shaped as electrical connector elements for connection to external circuits.

The plate 19 has an aperture 19a through which the rotor 8 extends.

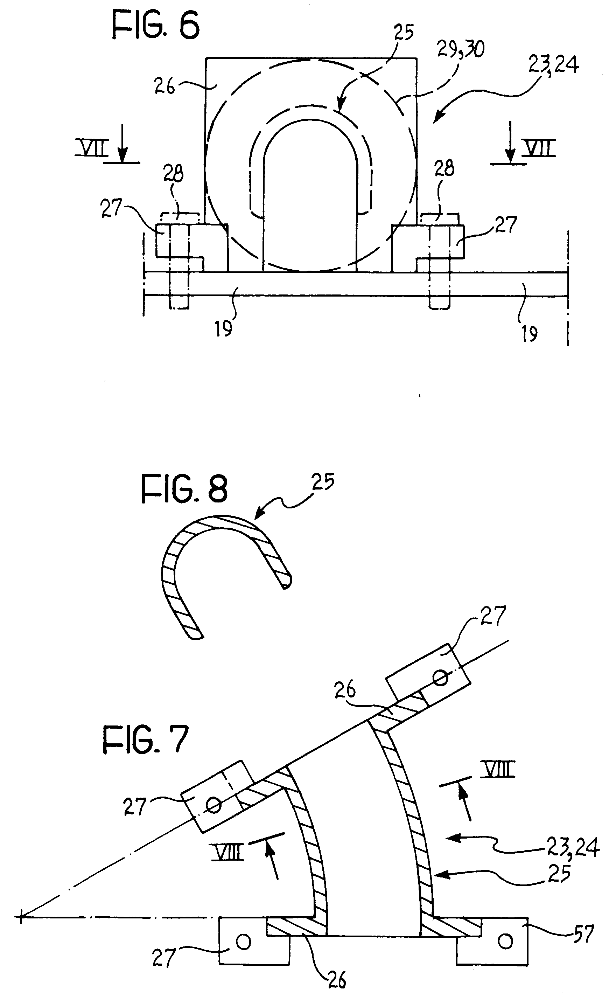

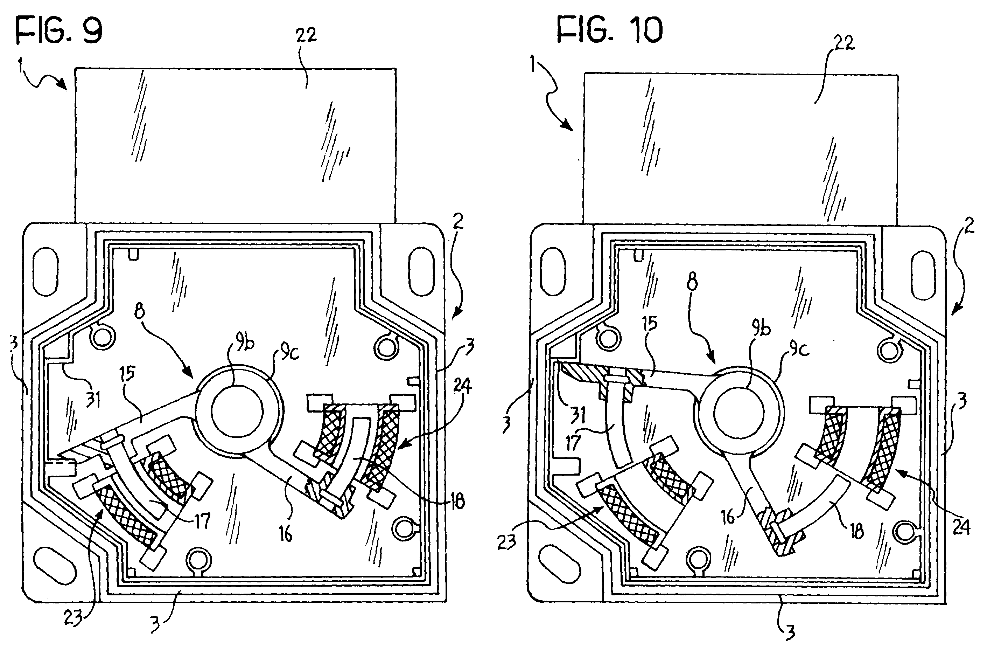

As seen in Figure 3, to one face of the plate 19 are fixed two coils generally indicated 23 and 24, respectively associated with the core 17 of the arm 15 and the core 18 of the arm 16 of rotor 8. These coils each comprise a respective support former, for example of the type illustrated in Figure 6 to 8. The former 25 shown in these Figures has an arcuate form along a circular arc and a transverse section essentially in the form of a U or C (Figure 8). The former 25 extends between two end walls 26 (Figures 6 and 7) which form an angle with one another (Figure 7). At the bottom these walls form respective pairs of fixing projections 27 which allow anchorage to the plate 19, for example by means of screws or rivets 28 (Figure 6).

The above-described shape of each former 25, in particular the U or C shape of the portion of each of these intended to receive the winding, allows them to be made easily in moulded plastics materials.

Each coil 23, 24 comprises a winding or solenoid 29, 30 (Figures 3 and 6) disposed around the C or U shape portion of the respective former.

Preferably the coils 23 and 24 are identical to one another and their longitudinal axes are arcuate following a circular arc co-axial with axis A-A of the rotor 8 along an arc of the same circle.

As an alternative, in order to allow to more easily wind the wire thereon, the formers 25 of coils 23 and 24 can have an arcuate shape, however with their end walls or flanges 26 lying parallel with one another instead of lying in radially converging planes.

The terminals or ends of the windings 29 and 30 of the coils 23 and 24 are connected, in a manner not shown, to corresponding terminals 21 of the connector portion 22 of the casing 2 for connection to external circuits for detection of the variation in the inductance of the said windings.

As seen, for example in Figure 3, within the body 3 is defined a reference abutment surface 31 for at least one of the two arms of the rotor 8. In the illustrated example the abutment 31 is associated with the arm 15 of the rotor, and is disposed and orientated in such a way that when the arm 15 rests against it both the cores 17 and 18 are totally withdrawn from the associated coils 23 and 24, as seen in Figure 10.

The abutment surface 31 represents a useful reference for assembly of the sensor. During assembly the rotor 8 is introduced into the body 3 (before the cover 4) is fitted and the arm 15 is brought into engagement against the abutment surface 31 so that it can be further introduced into the casing being careful to avoid any interference between the cores 17 and 18 and the associated coils 23 and 24 already fixed to the plate 19 previously introduced and fixed into the body 3.

The above-described arrangement is such that, in use, upon variation of the angular position of the rotor 8 with respect to the casing, the angular penetration of the cores 17 and 18 into the associated coils 23 and 24 varies correspondingly, and consequently the inductance of the solenoids or windings 29 and 30 of the said coils consequently vary.

As mentioned above, preferably the coils 23 and 24 and the associated cores 17 and 18 are identical to one another so that in operation the windings 29 and 30 have substantially the same inductance value for each angular position of the rotor 8.

The provision of two coils and associated cores connected to the same rotor makes it possible to achieve a redundancy for safety, which typically is required for some applications, for example for the detection of the angular position of the accelerator pedal of a motor vehicle.

In this case the external circuits to which the windings 29 and 30 are connected can be conveniently pre-arranged in a manner known per se, for recognising possible failure conditions (for example short circuits between turns) of a winding, and in this case can operate solely on the signal obtained from the other, surviving winding.

As those skilled in the art will however appreciate, for the purpose of achieving this safety redundancy it is not strictly essential that the two coils and the associated cores be identical with one another.

In Figure 3 there is schematically illustrated an accelerator pedal P the arm L of which is connected for rotation with the rotor 8 of the sensor described above. The condition shown in Figure 3 is, for example, that in which the pedal P is released (motor of the motor vehicle idling), whilst the condition assumed by the sensor 1 when the pedal P is completely depressed is shown for example in Figure 9.

The sensor described above lends itself to use with direct coupling to the rotatable member which is operatively associated with it. However the sensor also lends itself to a coupling of indirect type, that is to say geared down.

The coplanar arrangement of the arms of the rotor and the associated cores, as well as the associated coils, makes it possible to form a sensor with redundant sensor parts for security without this involving an increase in the dimensions of the sensor, in particular in the axial sense.

Naturally, the principle of the invention remaining the same, the embodiments and the details of construction can be widely varied with respect to what has been described and illustrated purely by way of non-limitative example, without by this departing from the ambit of the invention as defined in the annexed Claims.

## Claims

1. A position sensor (1) for detecting the angular position of a rotatable member such as an accelerator pedal (P) of a motor vehicle, characterised in that it comprises:
a support casing (2) in which a rotor (3) is rotatably mounted, intended to be coupled for rotation with the said rotatable member, and having a pair of essentially coplanar and angularly spaced transverse arms (15, 16);
each of the said arms (15, 16) being connected to a respective core of ferromagnetic material (17, 18) in the shape of an arc of a circle co-axial with the axis of rotation (A-A) of the rotor (8); the said cores (17, 18) extending from respective arms (15, 16) in the same angular direction and having an extent less than the angular distance between said arms (15,16);
a pair of solenoids (29, 30) being fixed within the casing (2) and each having a respective longitudinal arcuate axis extending along an arc of a circle co-axial with the axis A-A of the rotor (8), and each being associated with a respective core (17, 18), in such a way that upon variation of the angular position of the rotor (8) with respect to the casing (2) the angular penetration of the said cores (17, 18) into the associated solenoids (29, 30) varies correspondingly as does the inductance of the said solenoid (29, 30).

2. A sensor according to Claim 1, in which the said cores (17, 18) have the same angular extent and the associated solenoids (29, 30) likewise have the same angular extent.

3. A sensor according Claim 1 or Claim 2, in which the said cores (17, 18) and the associated solenoids (29, 30) are aligned along the circumference of the same circle co-axial with the axis (A-A) of the rotor (8).

4. A sensor according to any preceding Claim, in which the support casing (2) comprises an essentially bowl shape body (3) to which is coupled an associated closure cover (4) and in which the cover (4) and the wall (3a) of the body (3) which faces the cover (4) are provided with means (10, 11) for supporting rotation of the said rotor (8).

5. A sensor according to any preceding Claim, in which the said solenoids (29, 30) are wound on respective formers (25) mounted on a circuit board (19) fixed in the casing (2) and carrying electrical connection members (21) which extend through a portion (22) of the casing (2) shaped in the form of electrical connection elements for connection to external circuits for detecting variations in the inductance in the said solenoids (29, 30).

6. A sensor according to Claims 4 and 5, in which the said portion (22) of the casing (2) shaped as an electrical connector element is formed in a side wall of the said body (3).

7. A sensor according to any preceding Claim, in which the rotor (8) is made of moulded plastics material and the said cores (17, 18) are partially embedded in the arms (15, 16) of the rotor (8) upon moulding these latter.

8. A sensor according to any preceding Claim, in which the said solenoids (29, 30) are wound around respective formers (25) of moulded plastics material having an essentially U or C shape transverse section.

9. A sensor according to Claim 4, in which the said body (3) has a reference abutment surface (31) defined therein for at least one arm (15) of the rotor (8), the said abutment surface (31) being disposed in such as way that when the said arm (15) of the rotor (8) contacts against it, both the cores (17, 18) are totally withdrawn from the associated solenoids (29, 30).

10. A sensor according to any preceding Claim, in which the rotor (3) has a shaft (9) one end (14) of which projects out from the said supporting casing (2), and in which between the said casing (2) and this end (14) of the shaft (9) are provided sealing means (12).
